Europäisches Patentamt

(19) European Patent Office

Office européen des brevets

(11) Publication number: **0 313 500 B1**

# EUROPEAN PATENT SPECIFICATION

(45) Date of publication of patent specification :
31.07.91 Bulletin 91/31

(51) Int. Cl.⁵ : **B60C 15/06**

(21) Application number : **88630172.0**

(22) Date of filing : **05.10.88**

(54) Pneumatic tires.

(30) Priority : 22.10.87 US 111249

(43) Date of publication of application :
26.04.89 Bulletin 89/17

(45) Publication of the grant of the patent :
31.07.91 Bulletin 91/31

(84) Designated Contracting States :
DE FR GB IT

(56) References cited :
DE-A- 2 630 657
DE-A- 2 718 710
GB-A- 1 276 298
GB-A- 2 035 228
US-A- 3 392 773
US-A- 3 895 666

(73) Proprietor : THE GOODYEAR TIRE & RUBBER
COMPANY
1144 East Market Street
Akron, Ohio 44316-0001 (US)

(72) Inventor : Harrison, Danny Edward
11982 Shoshone Ave., N.W.
Uniontown Ohio 44685 (US)
Inventor : Zekoski, Joseph
2788 Laurel Woods Blvd.
Stow Ohio 44224 (US)

(74) Representative : Leitz, Paul
Goodyear Technical Center, Patent
Department
L-7750 Colmar-Berg (LU)

## Description

The present invention relates generally to pneumatic tires and more specifically to the bead portions of pneumatic tires as described in the introductory portion of claim 1.

A known tire according to the preamble of claim 1 is shown, e.g., in US-A-3392773.

The edges of the turn-up portions of the carcass ply, or plies, of a radial ply tire can be locations for the concentration of stresses during the operation of the tire. Such stress concentrations may eventually lead to degradation of the tire structure at that location. In the past, it has been known for example from US A 3392773 to employ stiffening members comprising strips of rubber. Tests have indicated that tires made according to the invention have significantly better bead durability than tires having only rubber stiffening members that were not reinforcing with textile cords. The concentration of stresses, at the carcass ply edges, is reduced in tires according to the characterizing portion of claim 1 with the desirable result that the rate of degradation of the tire at those locations is decreased.

The features of the present invention are set forth with particularity in the appended claims. The present invention, both as to its structure and manner of operation, may best be understood by referring to the following detailed description, taken in accordance with the accompanying drawings in which :

Fig. 1 in a partial cross-sectional view of a tire ;

Fig. 2 is an enlarged view of a bead portion of the tire of Fig. 1 ;

Fig. 3 is a view of the bead portion of a tire according to another embodiment of the invention ; and

Fig. 4 is a view of the bead portion of a tire according to yet another embodiment of the invention.

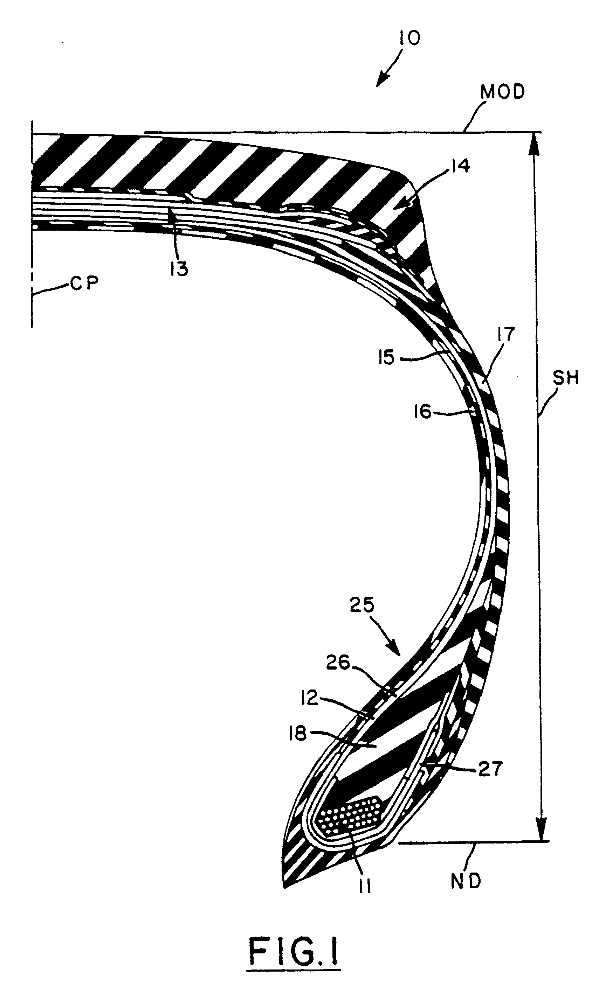

A tubeless pneumatic tire 10 of size 295/75R22.5 according to the invention is shown in Fig. 1 in a partial section taken in a plane that contains the axis of rotation of the tire. While only the portion of the tire located on one side of the mid-circumferential plane CP is illustrated in Fig. 1, it is understood that at least with respect to its bead portions 25 a tire according to the invention is substantially symmetrical with respect to its mid-circumferential centerplane. As used herein and in the claims, the mid-circumferential centerplane CP of a tire is a plane which is perpendicular to the axis of rotation of a tire and is located midway between the sidewalls of the tire.

A pneumatic tire according to the invention has a pair of axially spaced apart annular bead cores 11. While the bead cores of the tire in this embodiment have a hexagonal cross-section, it is understood that the invention may be practiced with tires having bead cores of other cross-sectional shapes such as circular, square or oblong.

As used herein, and in the claims, the terms "axial" and "axially" refer to directions that are parallel to the axis of rotation of a tire, and the terms "radial" and "radially" refer to directions that are perpendicular to the axis of rotation of the tire.

A carcass ply 12 of side-by-side cables of high tensile material extends between the bead cores 11. As used herein, "high tensile" is understood to refer to either a metallic material having a tensile breaking strength of at least 260 kg/mm² or an organic material having a tensile strength of at least 15 gm/denier. In each of the embodiments illustrated herein, the cables comprise steel, but they could comprise any suitable high tensile material such as aramid. The cables of the carcass ply 12 intersect the mid-circumferential centerplane CP at angles in the range of 75° to 90° with respect to said mid-circumferential centerplane.

As used herein and in the claims the nominal bead diameter ND of a tire is understood to mean the nominal diameter of the bead seats of a rim that a tire is specified to be mounted upon. For example, the tire illustrated in Fig. 1 is of a size 295/75R22.5 and has a nominal bead diameter of 57 cm (22.5 inches).

As used herein and in the claims, the section height SH of a tire is understood to mean one half of the difference between the maximum outside diameter of the tire MOD, when it is mounted upon its specified rim and inflated to its specified inflation pressure but not subjected to any load, and the nominal bead diameter ND of the tire.

A belt package 13 is disposed radially outwardly of the carcass ply 12 in a crown portion of the tire. In the tire illustrated herein, the belt package comprises unfolded plies of steel cables, but it is understood that a tire designer may practice this invention in a tire having any suitable belt package for a particular tire application. A ground engaging tread portion 14 is disposed radially outwardly of the belt package 13.

Inasmuch as the illustrated preferred embodiments each have a single carcass ply 12 of steel cables, it is desirable to have a substantially moisture impervious barrier layer 15 disposed inwardly of the carcass ply to inhibit corrosion of the steel cable of the carcass ply. If, as in the embodiment illustrated in Fig. 1, the tire is of the tubeless variety a substantially air impervious innerliner 16 is also disposed inwardly of the carcass ply. A layer 17 of sidewall rubber is disposed axially outwardly of the carcass ply in each sidewall of the tire.

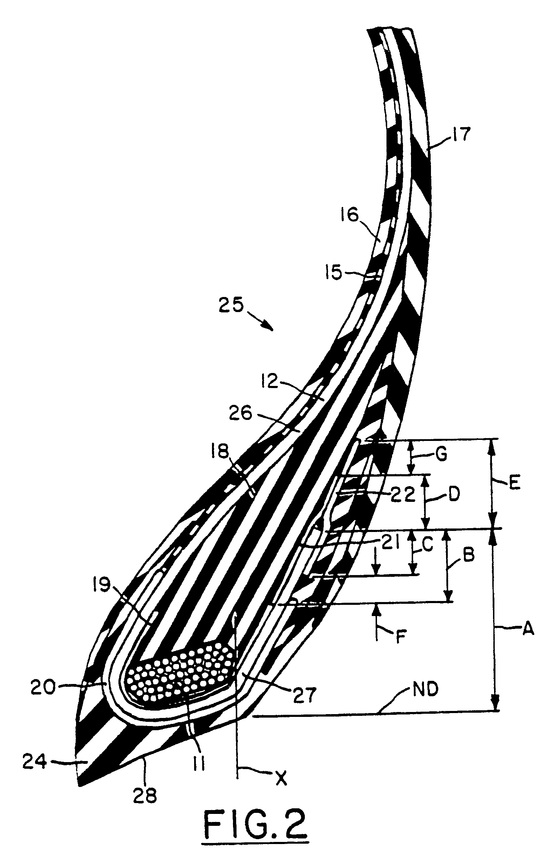

Further details of the invention may best be described with reference to Fig. 2 which is an enlarged cross-sectional view of a bead portion of the tire illustrated in Fig. 1.

The carcass ply has a central portion 26 and a pair of turn-up portions 27. Each of the turn-up portions 27 is folded axially and radially outwardly about a bead core 11. Each turn-up portion 27 of the carcass ply 12 terminates at a lateral edge of the carcass ply, with the lateral edges of the carcass ply being disposed radially outwardly of the nominal bead diameter ND of the tire a radially measured distance A in the range of 5% to 30%, preferably 10% to 25%, of the section height SH of the tire. For example in the 295/75R22.5 tire illustrated in Figs. 1 and 2, the distance A is 16.0% of the section height SH.

An annular elastomeric apex member 18 is interposed between each of the turn-up portions 27 of the carcass ply and the central portion 26 of the carcass ply. In the preferred embodiment illustrated herein a protective layer 19, comprising square woven nylon fabric embedded in rubber that contains nylon flock, is interposed between the bead core 11 and the steel cables of the carcass ply 12 to prevent the steel cables from abrading against the bead core. The cables of the carcass ply are protected from chafing against a rim by a chafer strip 20 that is disposed on the side of the carcass ply that is distal from the bead core 11. The chafer strip 20 is reinforced by metal wires oriented at about 23° with respect to a circumferential line of the tire. As used herein and in the claims, a "circumferential line of the tire" is a circle in a plane that is perpendicular to the axis of rotation of the tire, with the center of the circle being located on said axis of rotation. A layer 24 of an elastomeric compound which is especially tough and hard to resist chafing forms the outer layer of the radially inner portion of the tire bead portion. If desired, this outer layer 24 may be fabric reinforced, for example with square woven nylon (not shown).

Each turn-up portion 27 of the carcass ply 12 has a pair of annular stiffening members 21, 22 associated therewith. It is critical that said stiffening members 21, 22 are entirely located axially outwardly of the axially outermost extent X of the associated bead core 11 because when a member is compressed between a rim and a bead core, it can tend to result in a higher stress concentration at an edge of that member. Put another way, each of the stiffening members 21, 22 in its entirety is located such that it will not be radially interposed between a bead core 11 and the radially innermost surface 28 of the bead portion 25 of the tire. The first annular stiffening member 21 is disposed axially inwardly of and adjacent to the turn-up portion 27 of the carcass ply. In a preferred embodiment, the first stiffening member 21 is interposed between the annular elastomeric apex member 18 and the turn-up portion 27 of the carcass ply. The second stiffening member 22 is disposed axially outwardly of and adjacent to the turn-up portion 27 of the carcass ply.

Each of the stiffening members 21, 22 comprises side-by-side cords of a textile material with said cords oriented in the range of 20° to 40°, preferably in the range of 25° to 35°, with respect to a circumferential line of the tire. In a preferred embodiment in which the single carcass ply comprises steel cables, the textile cords of the stiffening members comprise nylon.

Each of the stiffening members 21, 22 has a radially innermost edge which is disposed radially inwardly of the associated lateral edge of the carcass ply a radially measured distance B, C in the range of 5 mm to 35 mm with each of the stiffening members being entirely located axially outwardly of the axially outermost extent X of the associated bead core, preferably in the range of 10 mm to 30 mm so long as each of the stiffening members is entirely located axially outwardly of the axially outermost extent X of the associated bead core. For example, in the 295/75R22.5 tire illustrated in Figs. 1 and 2, the distance B is 23 mm and the distance C is 13 mm. Each of the stiffening members has a radially outermost edge which is disposed radially outwardly of the associated lateral edge of the carcass ply a radially measured distance D, E in the range of 5 mm to 45 mm, preferably in the range of 10 mm to 30 mm. For example, in the tire illustrated in Figs. 1 and 2, the distance D is 13 mm and the distance E is 23 mm.

Preferably, the radially innermost edges of the first and second stiffening members 21, 22 are radially spaced apart form one another a radially measured distance F in the range of 5 mm to 15 mm. In the tire illustrated in Figs. 1 and 2, this distance F is 10 mm. Preferably, the radially outermost edges of the first and second stiffening members are spaced radially apart from one another a radially measured distance G in the range of 5 mm to 15 mm. In the tire illustrated in Figs. 1 and 2, this distance G is 10 mm.

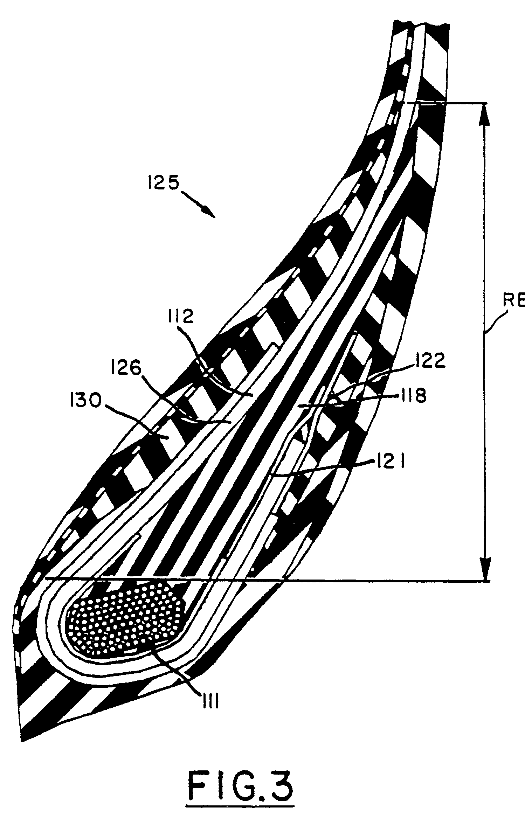

Fig. 3 is a cross-sectional view of the bead portion 125 of a tubeless tire according to another preferred embodiment taken in a plane that contains the axis of rotation of the tire. This embodiment of the invention is substantially the same as the embodiment illustrated in Figs. 1 and 2 and further comprises an elastomeric reinforcing member 130 disposed axially inwardly of the central portion 126 of a single carcass ply 112 of side-by-side steel cables. It is preferred that the radial extent RE of the elastomeric reinforcing member 130 be substantially the same as the radial extent of the elastomeric apex member 118, it being most preferred that each apex member 118 extends radially outwardly of both of the associated stiffening members 121, 122.

It is understood for the purposes of describing and claiming the present invention that the radial extents RE of both the elastomeric reinforcing member 130 and the elastomeric apex member 118 refers to the radially measured distance RE from the radially outermost point on the bead core 111 to the radially outermost edges of the reinforcing member 130 and the apex member 118. The radial extents RE are understood to be substantially the same as long as they do not differ by more than 10%.

The use of a reinforcing member 130 axially inwardly of the central portion of a carcass ply to facilitate the carcass ply in its attempt to conform to its natural shape when the tire is inflated, thus improving the durability of the tire by reducing inflation strains caused thereon is known from US A 4609023.

A tubeless tire according to this embodiment has the lateral edges of the carcass ply 12 and the associated stiffening strips 121, 122 arranged in the same manner as in the embodiment illustrated in Figs. 1 and 2 and described herein.

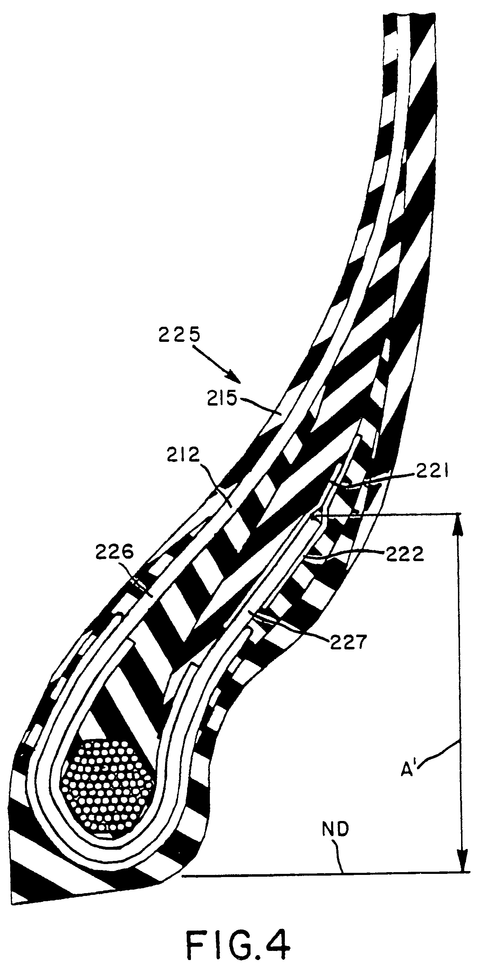

Referring next to Fig. 4, there is illustrated a cross-sectional view of the bead portion 225 of a tube-type tire according to yet another preferred embodiment taken in a plane that contains the axis of rotation of the tire. Of course, a tube-type tire does not have an innerliner, but it is still desirable to have a substantially moisture impervious barrier layer 215 disposed inwardly of the central portion 226 of the single carcass ply 212 of side-by-side steel cables. As in the other embodiments, the cables of the carcass ply intersect a mid-circumferential centerplane of the tire at angles in the range of 75° to 90° with respect to the mid-circumferential centerplane of the tire. The turn-up portions 227 of the carcass ply have lateral edges that are located radially outwardly of the nominal bead diameter ND of the tire a radially measured distance A in the range of 10% to 30%, preferably 15% to 25% of the section height of the tire. The distance A' for the tube-type tire differs from the corresponding dimension A for a tubeless tire because the rims upon which tube-type tires are mounted have rim flanges of different configurations from the rims used with tubeless tires. However, the location of the stiffening members 221, 222 with respect to the associated carcass ply turn-up portion 227 is substantially the same as in the other preferred embodiments described herein.

## Claims

1. A pneumatic tire comprising : a pair of axially spaced apart annular bead cores (11 ; 111) ; a carcass ply (12 ; 112) of side-by-side cables of a high tensile material, said carcass ply comprising a central portion (26) and a pair of turn-up portions (27), each of said bead cores (11) having one of said turn-up portions (27) folded axially and radially outwardly thereabout, each said turn-up portion (27) including a lateral edge of the carcass ply (12 ; 112), the cables of the carcass ply intersecting a mid-circumferential plane of the tire at angles in the range of 75° to 90° ; and characterized by each turn-up portion (27) of the carcass ply (12 ; 112) having a pair of annular stiffening members (21, 22 ; 121, 122) associated therewith, the first annular stiffening member (21 ; 121) being disposed axially inwardly of and adjacent to the turn-up portion (27) of the carcass ply (12 ; 112) and the second annular stiffening member (22 ; 122) being disposed axially outwardly of and adjacent to the turn-up portion (27) of the carcass ply (12 ; 112), each of the stiffening members (21, 22 ; 121, 122) having a radially innermost edge which is disposed radially inwardly of the associated lateral edge of the carcass ply with each of the stiffening members (21, 22 ; 121, 122) being entirely located axially outwardly of the axially outermost extent (X) of the associated bead core (11 ; 111), each of the stiffening members (21, 22 ; 121, 122) having a radially outermost edge which is disposed radially outwardly of the associated lateral edge of the carcass ply (12 ; 112), characterized in that the radially innermost edges of the stiffening members (21, 22 ; 121, 122) are at a radially measured distance (B, C) from the edge of the carcass ply of at least 5 mm, and that the radially outermost edges of said stiffening members (21, 22 ; 121, 122) are at a radially measured distance (D, E) from the edge of the carcass ply (12 ; 112) in the range of 5 mm to 45 mm, each said stiffening member (21, 22; 121, 122) comprising side-by-side cords of a textile material with said cords oriented in the range of 20° to 40° with respect to a circumferential line of the tire.

2. A pneumatic tire according to claim 1 characterized by the cables of said carcass ply (12 ; 112) comprising steel.

3. A pneumatic tire according to claim 1 characterized by the cables of said carcass ply (12 ; 112) comprising aramid.

4. A pneumatic tire according to any of the preceding claims characterized by the cords of said stiffening members (21, 22 ; 121, 122) comprising nylon.

5. A pneumatic tire according to any of the preceding claims characterized by the cords of said first and second stiffening members (21, 22 ; 121, 122) being oriented in opposite manners with respect to said circumferential line of the tire.

## Patentansprüche

1. Luftreifen mit : einem Paar axial beabstandeter Ringwulstkerne (11 ; 111) ; einer Karkassenlage (12; 112) von nebeneinander liegenden Seilen aus hoch zugfestem Material, wobei die Karkassenlage einen Zentralabschnitt (26) und ein Paar von Hochschlagabschnitten (27) umfaßt, wobei jeder der Wulstkerne (11) einen der Hochschlagabschnitte (27) hat, welcher axial und radial außerhalb dessen gefaltet ist, wobei dieser Hochschlagabschnitt (27) eine Seitenkante der Karkassenlage (12 ; 112) enthält, die Seile der Karkassenlage eine Mittenumfangsebene des Reifens unter Winkeln im Bereich von 75° bis 90° schneiden ; und dadurch gekennzeichnet, daß jeder Hochschlagabschnitt (27) der Karkassenlage (12 ; 112) ein Paar von ringförmigen Versteifungsgliedern (21, 22 ; 121, 122) hat, die diesem zugeordnet sind, wobei das erste ringförmige Versteifungsglied (21 ; 121) axial innerhalb des und angrenzend an den Hochschlagabschnitt (27) der Karkassenlage (12 ; 112) angeordnet ist, und das zweite ringförmige Versteifungsglied (22 ; 122) axial außerhalb des und angrenzend an den Hochschlagabschnitt (27) der Karkassenlage (12 ; 112) angeordnet ist, wobei jedes der Versteifungsglieder (21, 22 ; 121, 122) eine radial innerste Kante hat, die radial innerhalb der zugeordneten Seitenkante der Karkassenlage angeordnet ist, jedes der Versteifungsglieder (21, 22 ; 121, 122) vollständig axial außerhalb der axial äußersten Erstreckung (X) des zugeordneten Wulstkerns (11 ; 111) angeordnet ist, jedes der Versteifungsglieder (21, 22 ; 121, 122) eine radial äußerste Kante hat, die radial außerhalb der zugeordneten Seitenkante der Karkassenlage (12, 112) angeordnet ist, dadurch gekennzeichnet, daß die radial innersten Kanten der Versteifungsglieder (21, 22 ; 121, 122) von der Kante der Karkassenlage in einem radial gemessenen Abstand (B, C) von wenigstens 5 mm und die radial äußersten Kanten der Versteifungsglieder (21, 22 ; 121, 122) von der Kante der Karkassenlage (12, 112) in einem radial gemessenen Abstand (D, E) in dem Bereich von 5 mm bis 45 mm angeordnet sind, wobei jedes Versteifungsglied (21, 22 ; 121, 122) nebeneinander liegende Korde aus Textilmaterial umfaßt, wobei die Korde im Bereich von 20° bis 40° bezüglich einer Umfangslinie des Reifens ausgerichtet sind.

2. Luftreifen nach Anspruch 1, dadurch gekennzeichnet, daß die Seile der Karkassenlagen (12 ; 112) Stahl umfassen.

3. Luftreifen nach Anspruch 1, dadurch gekennzeichnet, daß die Seile der Karkassenlagen (12, 112) Aramid umfassen.

4. Luftreifen nach einem der vorhergehenden Ansprüche, dadurch gekennzeichnet, daß die Korde der Versteifungsglieder (21, 22 ; 121, 122) Nylon umfassen.

5. Luftreifen nach einem der vorhergehenden Ansprüche, dadurch gekennzeichnet, daß die Korde der ersten und zweiten Versteifungsglieder (21, 22 ; 121, 122) im Bezug auf diese Umfangslinie des Reifens entgegengesetzt zueinander ausgerichtet sind.

## Revendications

1. Bandage pneumatique comprenant : une paire de tringles de talons annulaires (11 ; 111) axialement espacées ; une nappe de carcasse (12 ; 112) constituée par des câbles en matière extrêmement extensible et disposés côte à côte, la nappe de carcasse comprenant une portion centrale (26) et une paire de portions de recouvrement (27), chacune des tringles de talons (11) présentant une des portions de recouvrement (27) repliées axialement et radialement à l'extérieur autour d'elle, chaque portion de recouvrement (27) comprenant un bord latéral de nappe de carcasse (12 ; 112), les câbles de la nappe de carcasse coupant un plan circonférentiel médian du bandage pneumatique en formant des angles dans le domaine de 75° à 90° ; et caractérisé en ce que chaque portion de recouvrement (27) de la nappe de carcasse (12 ; 112) est munie d'une paire d'organes annulaires de renforcement (21, 22 ; 121, 122) qui lui sont associés, le premier organe annulaire de renforcement (21 ; 121) étant disposé axialement à l'intérieur de et en position adjacente à la portion de recouvrement (27) de la nappe de carcasse (12 ; 112) et le second organe annulaire de renforcement (22 ; 122) étant disposé axialement à l'extérieur de et en position adjacente à la portion de recouvrement (27) de la nappe de carcasse (12 ; 112), chaque organe de renforcement (21, 22 ; 121, 122) étant muni d'un bord radialement le plus interne, qui est disposé radialement à l'intérieur du bord latéral de la nappe de carcasse, qui lui est associé, chacun de organes de renforcement (21, 22 ; 121, 122) étant entièrement situé axialement à l'extérieur de l'étendue axialement la plus externe (X) de la tringle de talon (11 ; 111) qui lui est associée, chacun des organes de renforcement (21, 22 ; 121, 122) comprenant un bord radialement le plus externe, qui est disposé radialement à l'extérieur du bord latéral de la nappe de carcasse (12 ; 112), qui lui est associé, caractérisé en ce que les bords radialement les plus internes des organes de renforcement (21, 22 ; 121, 122) sont situés à des distances (B, C) (mesurées en direction radiale) du bord de la nappe de carcasse, d'au moins 5 mm, et en ce que les bords radialement les plus externes des organes de renforcement (21, 22 ; 121, 122) sont situés à des distances (D, E) (mesurées en direction radiale) du bord de la nappe de carcasse (12 ; 112), dans le domaine de 5 mm à 45 mm, chaque organe de renforcement (21, 22 ; 121, 122) étant constitué par des câblés en matière textile, disposés côte à côte, selon une orientation dans le domaine de 20° à 40° par rapport à une ligne circonférentielle du bandage pneumatique.

2. Bandage pneumatique selon la revendication 1, caractérisé en ce que les câbles de la nappe de carcasse (12 ; 112) sont constitués d'acier.

3. Bandage pneumatique selon la revendication 1, caractérisé en ce que les câbles de la nappe de carcasse (12 ; 112) sont constitués d'aramide.

4. Bandage pneumatique selon l'une quelconque des revendications précédentes, caractérisé en ce que les câblés des organes de renforcement (21, 22 ; 121, 122) sont constitués de nylon.

5. Bandage pneumatique selon l'une quelconque des revendications précédentes, caractérisé en ce que les câblés des premier et second organes de renforcement (21, 22 ; 121, 122) sont d'orientation opposée par rapport à la ligne circonférentielle du bandage pneumatique.

FIG.1

FIG.2

125

112

126

130

122

118

121

RE

111

# FIG.3

FIG.4